# EUROPEAN PATENT APPLICATION

(11) **EP 4 674 549 A1**
(43) Date of publication of application: **07.01.2026**
(21) Application number: 24764014.7
(22) Date of filing: 29.02.2024
(51) Int. Cl.: B23C 5/00, B23C 5/10, B23C 5/22

(54) **ROTARY CUTTING TOOL, INSERT, AND HOLDER**

(30) Priority: 02.03.2023 JP 2023031912
(71) Applicant: NTK CUTTING TOOLS CO., LTD., Komaki-shi, Aichi 485-8510 (JP)
(72) Inventor: YAMASHITA, Yuji, Komaki-shi, Aichi 485-8510 (JP); FUJIMOTO, Takashi, Komaki-shi, Aichi 485-8510 (JP)
(74) Representative: D Young & Co LLP
(86) International application number: PCT/JP2024/007552
(87) International publication number: WO 2024/181537

(57) **Abstract**

The present disclosure provides a rotary cutting tool having a holder and an insert as separate components, with an improved centering accuracy at a reduced cost. In the rotary cutting tool, the insert includes: a cutting edge that is formed on at least one of one end of the insert and a side surface of the insert; a projected part that is formed on the other end of the insert; and a through hole that extends through the insert along an axial direction of the insert. The projected part has a cone gradient surface such that an outer diameter of the projected part decreases from the one end side of the insert toward the other end side of the insert. The holder has an elongated shape, and the holder is provided with a recessed part on one end where the insert is fixed, wherein the recessed part includes: a recessed housing part in which the projected part is housed, the housing part being provided with a cone gradient seat surface such that an inner diameter increases from the other end side of the holder toward the one end side of the holder; and a female thread part that is located on the other end side of the holder with respect to the housing part, wherein an opening end of the female thread part is connected to the housing part.

## Description

### Technical Field

The present invention relates to a rotary cutting tool, an insert, and a holder.

### Background Art

A rotary cutting tool, such as an end mill, has been conventionally known (see, for example, Patent Documents 1-3). In an end mill described in Patent Document 1, a shank part and an end mill body are fixed to each other via screwing, by screwing a male screw part formed on the end mill body provided with a peripheral edge with a female thread part formed in the shank part. In an indexable rotary cutting tool described in Patent Document 2, an insert and a body are fixed to each other by screwing a mounting screw which extends through the insert with a female thread part formed in the body. In a rotary cutting tool described in Patent Document 3, a shank and a replaceable cutter are fixed to each other by screwing a mounting screw which extends through the replaceable cutter with a female thread part formed in the shank.

### Citation List

### Patent Literature

Patent Literature 1: WO2019/188135
Patent Literature 2: JP5731643 B
Patent Literature 3: JP4791826 B

### Summary of Invention

### Technical Problem

If a holder, such as a shank part, which is mounted on an apparatus side and an insert having a cutting edge formed on its leading end are manufactured as an integrated tool, when an insert is damaged, the entire tool will have to be replaced, which results in a high manufacturing cost. Thus, by forming the holder and the insert as separate components as described in Patent Documents 1-3, the manufacturing cost of rotary cutting tools can be reduced.

However, in the tool described in Patent Documents 1 and 2, since the alignment between the central axis of the holder and the central axis of the insert depends on the male screw part and the female thread part which are screwed into each other, there is room for improving the centering accuracy. In addition, since the male screw part is brazed onto the insert in the end mill described in Patent Document 1, it is necessary to improve the accuracy of the brazing, in order to improve the centering accuracy. Furthermore, in the rotary cutting tool described in Patent Document 3, a symmetric mating shape with respect to the central axis is formed in the holder and the insert in order to mate the holder and the insert with each other. Although the centering accuracy can be improved due to the mating shape formed in the holder and the insert, such configuration requires machining cost for machining such complicated mating shape.

The present invention has been made in order to solve at least some of the above-described problems, and an object of the present invention is to improve a centering accuracy in a rotary cutting tool which comprises a holder and an insert as separate components, while reducing the cost.

### Solution to Problem

The present invention has been made in order to solve at least some of the above-described problems, and the present invention can be implemented in the following aspects.
(1) According to an aspect of the present invention, a rotary cutting tool comprising a holder and an insert that is fixed to the holder is provided. In the rotary cutting tool, the insert includes: a cutting edge that is formed on at least one of one end in an axial direction of the insert and a side surface of the insert; a projected part that is formed on the other end in the axial direction of the insert, the projected part being projected along the axial direction of the insert; and a through hole that extends through the insert along the axial direction of the insert, the projected part has a cone gradient surface such that an outer diameter of the projected part decreases from the side of the one end of the insert toward the side of the other end of the insert, and the holder has an elongated shape, and the holder is provided with a recessed part on one end where the insert is fixed, the recessed part being recessed along an axial direction of the holder, wherein the recessed part includes: a recessed housing part in which the projected part of the insert is housed, the housing part being provided with a cone gradient seat surface such that an inner diameter increases from the side of the other end of the holder toward the side of the one end of the holder; and a female thread part that is located on the side of the other end of the holder with respect to the housing part and is formed along the axial direction of the holder, wherein an opening end of the female thread part is connected to the housing part.
   According to the configuration described above, the screw is inserted through the through hole of the insert, and the male screw part of the inserted screw is screwed into the female thread part in the holder, whereby the insert is fixed to the holder. That is to say, since the holder and the insert are formed as separate components, when the cutting edge of the insert is damaged, it is only necessary to replace the insert, without needing to replace the entire rotary cutting tool including the holder. In particular, centerless machining, which is performed for a holder in the case where the holder and an insert are configured as an integrated component, does not have to be performed during replacement of an insert in the above-described configuration. In addition, since the insert can be replaced while the holder remains mounted on an apparatus that rotates the rotary cutting tool, it is possible to shorten the time required for the adjustment of the original point of the rotary cutting tool with respect to the apparatus. As a result, it become possible to reduce the cost of the rotary cutting tool, as well as the manufacturing cost of a part to be cut by such tool. Furthermore, when the male screw part is fastened with the female thread part, the cone gradient seat surface formed in the housing part of the holder and the cone gradient surface formed on the projected part of the insert are brought into contact with each other. Upon rotation in the screw tightening direction after such contact, the holder and the insert are caused to approach each other in the axial direction, while their respective central axes are aligned with each other due to the contact between the cone gradient seat surface and the cone gradient surface. Since the cone gradient seat surface formed on the holder and the cone gradient surface formed on the insert do not have a complicated shape in this configuration, the recessed part of the holder and the projected part of the insert can be easily machined. In addition, the positioning performed by means of mating between the cone gradient seat surface and the cone gradient surface makes it possible to prevent misalignment of the insert with respect to the holder.
(2) In the rotary cutting tool according to aspect (1), an angle formed by the cone gradient seat surface and an axis of the holder, in a longitudinal cross-section of the holder which includes the axis of the holder, may be 30 degrees or more and 60 degrees or less.
   According to such configuration, since the angle formed by the cone gradient seat surface and the axis of the holder is 30 degrees or more, the thickness of a portion of the holder where the recessed part is formed does not become too thin, which makes it possible to prevent the stiffness of the holder from being lowered. In addition, since the angle formed by the cone gradient seat surface and the axis of the holder is 60 degrees or less, it is possible to prevent the misalignment of the insert with respect to the holder during fastening and is therefore possible to prevent the insert from being fixed to the holder in a tilted manner.
(3) In the rotary cutting tool according to aspect (1) or (2), the insert may be fixed to the holder by a bolt that is inserted through the through hole and screwed into the female thread part, and the rotary cutting tool may further comprise a rotation stop mechanism that restricts the insert from rotating around the axis of the holder relative to the holder.
   According to such configuration, since the insert that is fixed to the holder can be prevented from being rotated around the axis relative to the holder due to the rotation stop mechanism, the function of the rotary cutting tool can be sufficiently exerted.
(4) In the rotary cutting tool according to any one of aspects (1) to (3), an inner diameter of the through hole which is located on the side of the one end of the insert may be larger than an inner diameter of the through hole which is located on the side of the other end of the insert, wherein an engagement surface may be formed at a position where the inner diameters are shifted.
   According to such configuration, the head of the bolt which has been inserted into the through hole can be hooked on the engagement surface. Such configuration makes it possible to restrict the position of the bolt along the axial direction with respect to the insert.
(5) In the rotary cutting tool according to any one of aspects (1) to (4), the rotary cutting tool may be an end mill in which the cutting edge has at least one of a peripheral edge and an end cutting edge.
   Such configuration allows for an end mill to be provided at reduced cost.
(6) According to another aspect of the present invention, an insert fixed to a holder of a rotary cutting tool for use is provided. The insert comprises: a cutting edge that is formed on one end in an axial direction of the insert; a projected part that is formed on the other end in the axial direction of the insert, the projected part being projected along the axial direction of the insert; and a through hole that extends through the insert along the axial direction of the insert, wherein the projected part has a cone gradient surface such that an outer diameter of the projected part decreases from the side of the one end of the insert toward the side of the other end of the insert.
   According to such configuration, in the holder having the cone gradient seat surface that engages with the cone gradient surface of the insert, when the female thread part is formed on the opposite side to a position where the cone gradient seat surface faces the insert, the screw which has been inserted through the through hole is screwed into the female thread part to thereby fix the insert to the holder. Therefore, when the cutting edge of the insert is damaged, it is only necessary to replace the insert, without needing to replace the holder on which the insert is fixed. As a result, it becomes possible to reduce the cost of the rotary cutting tool. Furthermore, since the positioning of the insert with respect to the holder is determined by the cone gradient surface which has an uncomplicated shape, the holder and the insert can be easily machined. In addition, the positioning performed by means of the cone gradient surface makes it possible to prevent misalignment of the insert with respect to the holder.
(7) According to further aspect of the present invention, a holder that is used for a rotary cutting tool for fixing an insert is provided. The holder has an elongated shape and is provided with a recessed part on at least one of one end of the holder where the insert is fixed and a side surface, the recessed part being recessed along an axial direction of the holder, wherein the recessed part includes: a recessed housing part in which at least a portion of the insert is housed, the housing part being provided with a cone gradient seat surface such that an inner diameter increases from the side of the other end of the holder toward the side of the one end of the holder; and a female thread part that is located on the side of the other end of the holder with respect to the housing part and is formed along the axial direction of the holder, wherein an opening end of the female thread part is connected to the housing part.

According to such configuration, when the insert having the cone gradient surface which is engaged with the cone gradient seat surface of the holder is provided with a through hole through which a screw can be inserted, the screw which has been inserted through the through hole is screwed into the female thread part to thereby fix the insert to the holder. Therefore, when the cutting edge of the insert which is fixed to the holder is damaged, it is only necessary to replace the insert. As a result, it becomes possible to reduce the cost of the rotary cutting tool. Furthermore, since the positioning of the insert with respect to the holder is determined by the cone gradient seat surface which has an uncomplicated shape, the holder and the insert can be easily machined. In addition, the positioning performed by means of the cone gradient seat surface makes it possible to restrain misalignment of the insert with respect to the holder.

The present invention may be implemented in various forms, and may be implemented in the form of a rotary cutting tool, a holder, an insert, an end mill, a reamer, a cutter, a system comprising the same, etc., a manufacturing method of the rotary cutting tool, and a system comprising the same, etc.

### Brief Description of Drawings

[Figure 1] Figure 1 is a schematic perspective view of a rotary cutting tool according to an embodiment of the present invention.
[Figure 2] Figure 2 is a schematic exploded perspective view of the rotary cutting tool.
[Figure 3] Figure 3 is a schematic cross-sectional view of the rotary cutting tool.
[Figure 4] Figure 4 is a schematic exploded perspective view of a holder and an insert according to a second embodiment.
[Figure 5] Figure 5 is a schematic cross-sectional view of a rotary cutting tool according to the second embodiment.
[Figure 6] Figure 6 is a schematic exploded perspective view of a holder and an insert according to a third embodiment.
[Figure 7] Figure 7 is an enlarged perspective view of a recessed part in the holder according to the third embodiment.
[Figure 8] Figure 8 is a schematic cross-sectional view of a rotary cutting tool according to the third embodiment.
[Figure 9] Figure 9 is a schematic exploded perspective view of a holder and an insert according to a fourth embodiment.
[Figure 10] Figure 10 is a schematic cross-sectional view of a rotary cutting tool according to the fourth embodiment.

### Description of Embodiments

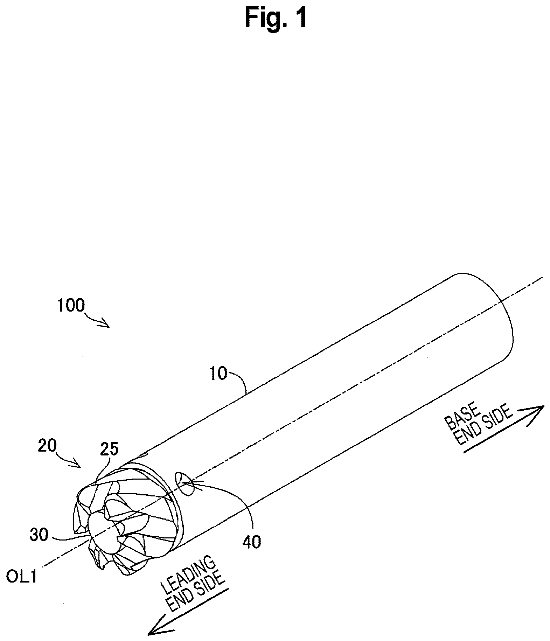

Figure 1 is a schematic perspective view of a rotary cutting tool 100 according to an embodiment of the present invention. In the rotary cutting tool 100 of the present embodiment, a holder 10 that is mounted on an apparatus so as to rotate around a central axis OL1 and an insert 20 that is provided with a cutting edge 25 on its peripheral surface and mounted on the holder 10 are configured as separate, removable components. Therefore, even when the cutting edge 25 is damaged due to long-term use, etc., it is only necessary to remove and replace the damaged insert 20 with a new insert 20, without needing to replace the holder 10. Such configuration makes it possible to reduce the cost of the rotary cutting tool 100.

As shown in Figure 1, the rotary cutting tool 100 of the present embodiment includes: the insert 20 provided with the cutting edge 25 at one end in the axial direction of the central axis OL1; the holder 10 having an elongated shape along the central axis OL1; a bolt 30 for fixing the insert 20 onto the holder 10 via bolt fastening; and a cylindrical pin 40. In Figure 1, the holder 10, the insert 20 and the bolt 30 are fixed to each other such that each of a central axis of the holder 10, a central axis of the insert 20 and a central axis of the bolt 30 coincide with the central axis OL1. In the following description, the side where the holder 10 is located along the central axis OL1 will also be referred to as the base end side, and the side where the insert 10 is located along the central axis OL1 will also be referred to as the leading end side.

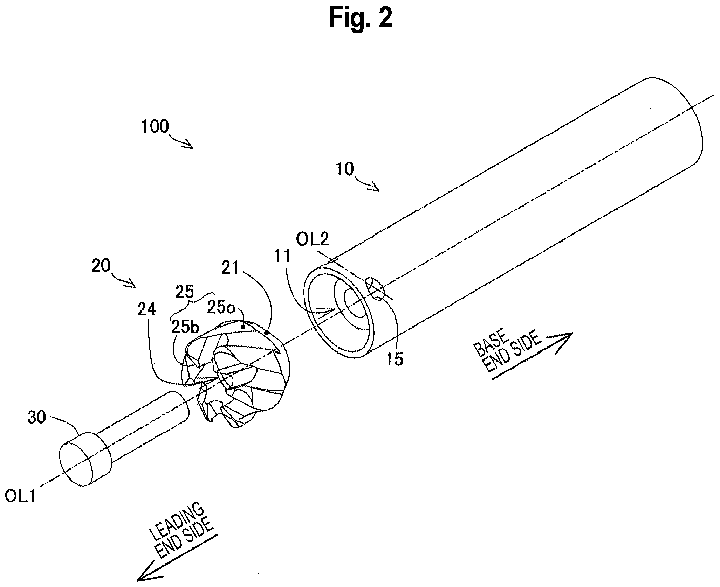

Figure 2 is a schematic exploded perspective view of the rotary cutting tool 100. As shown in Figure 2, the insert 20 includes, in addition to the cutting edge 25, a projected part 21 that is projected toward the base end side along the central axis OL1 and a through hole 24 that extends through the insert 20 along the central axis OL1. The cutting edge 25 has: an end cutting edge 25b formed on a leading end side end surface of the insert 20; and a peripheral edge 25o formed on a peripheral side surface on the leading end side. The rotary cutting tool 100 of the present embodiment is an end mill that rotates around the central axis OL1.

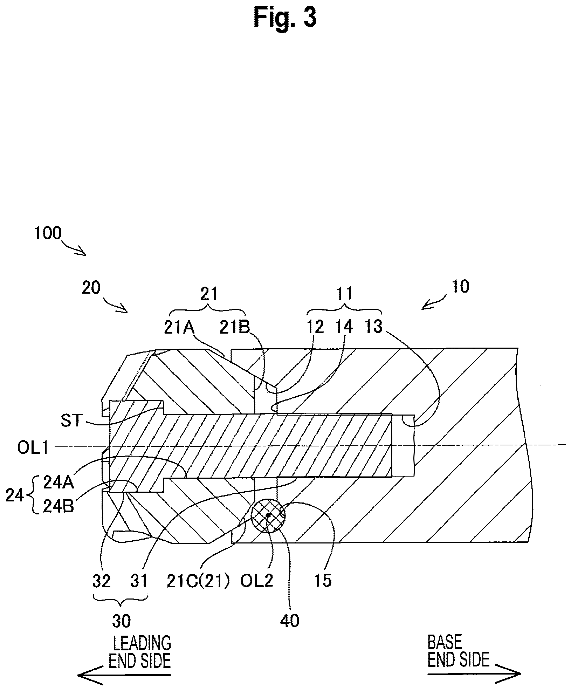

Figure 3 is a schematic cross-sectional view of the rotary cutting tool 100. Figure 3 shows a longitudinal cross-section that passes through the central axis OL and extends in parallel to the central axis OL1. The projected part 21 has: a cone gradient surface 21A that is formed on the leading end side and constitutes part of a conical surface which extends around the central axis OL1; a bottom surface 21B that is formed on the base end side and perpendicular to the central axis OL1; and a cutout 21C that is formed in a portion of the cone gradient surface 21A. The cone gradient surface 21A constitutes a conical surface which is formed such that the outer diameter of the projected part 21 decreases from the leading end side toward the base end side along the central axis OL1. The cone gradient surface 21A is machined with respect to the central axis of the insert (the same axis as the central axis OL1 in Figures 1-3). The cutout 21C is a surface which is formed by cutting out a portion of the cone gradient surface 21A along an axis that is perpendicular to the radial direction of the bottom surface 21B. The cutout 21C will be discussed later in more detail, in conjunction with the pin 40.

As shown in Figure 3, the through hole 24 formed in the insert 20 includes a base end side hole 24A formed on the base end side along the central axis OL1 and a leading end side hole 24B formed continuously to the base end side hole 24A on the leading end side along the central axis OL1. The base end side hole 24A and the leading end side hole 24B are holes which have circular cross-sections with different inner diameters and extend along the central axis OL1. The inner diameter of the base end side hole 24A is smaller than the inner diameter of the leading end side hole 24B. Therefore, a step (engagement surface) ST is formed at a position where the diameter of the base end side hole 24A and the inner diameter of the leading end side hole 24B are shifted, as shown in Figure 3. The inner diameter of the base end side hole 24A is larger than the inner diameter of the cross-section of a male screw part 31 of the bolt 30 and smaller than the inner diameter of the cross-section of a head 32 of the bolt 30. The inner diameter of the leading end side hole 24B is larger than the inner diameter of the cross-section of the male screw part 31 and the inner diameter of the cross-section of the head 32. Therefore, regarding the bolt 30 which has been inserted from the leading end side of the through hole 24, the position of the head 32 along the central axis OL1 is restricted by the step ST. The length of the leading end side hole 24B along the central axis OL1 is formed such that a leading end-side end surface of the bolt 30 is located on the base end side with respect to the leading end-side end surface of the insert 20, in a state in which the insert 20 is fixed to the holder 10 by the bolt 30.

As shown in Figure 2, the holder 10 is a member whose cross-section perpendicular to the central axis OL1 has a circular shape. The holder 10 has a recessed part 11 on the leading end side thereof, with the recessed part being recessed along the central axis OL1. The holder 10 is provided with a cylindrical pin hole 15 which is perpendicular to the central axis OL1 and extends through the holder 10 along a central axis OL2. The central axis OL2 is an axis perpendicular to the radial direction of the transverse cross-section of the holder 10. The pin 40 is inserted into the pin hole 15. The pin 40 which is inserted into the pin hole 15 is omitted in Figure 2.

As shown in Figure 3, the recessed part 11 is formed by a cone gradient seat surface 12, a bottom surface 14 and a female thread part 13. The cone gradient seat surface 12 is formed on the leading end side in the recessed part 11 so as to constitute part of a conical surface which extends around the central axis OL1. The cone gradient seat surface 12 is formed such that the inner diameter increases from the base end side toward the leading end side along the central axis OL1. The cone gradient seat surface 12 is machined with respect to the central axis of the holder 10 (the same axis as the central axis OL1 in Figures 1-3). The bottom surface 14 is a circular flat surface which is perpendicular to the central axis OL1 and connected to a base end of the cone gradient seat surface 12.

As shown in Figure 3, the leading end side inner diameter of the cone gradient seat surface 12 is larger than the inner diameter of the bottom surface 21B which is located on the base end side in the projected part 21 of the insert 20, and smaller than the leading end side inner diameter of the cone gradient surface 21A of the projected part 21. In addition, the inner diameter of the bottom surface 14 of the recessed part 11 is smaller than the inner diameter of the bottom surface 21B of the projected part 21. Thus, at least a portion of the projected part 21 is housed within a recessed housing part formed by the cone gradient seat surface 12 and the bottom surface 14, and the bottom surface 21B of the projected part 21 does not make contact with the bottom surface 14 of the recessed part 11. A portion of the cone gradient seat surface 12 and a portion of the bottom surface 14 have been removed so as to constitute the pin hole 15 as shown in Figure 3. In the present embodiment, in a longitudinal cross-section of the holder 10 which includes the central axis OL1, an angle formed by the cone gradient seat surface 12 and the central axis OL1 is 30 degrees. An angle formed by the cone gradient surface 21A of the insert 20 and the central axis OL1 is also 30 degrees, which is the same as the cone gradient seat surface of the holder 10.

As shown in Figure 3, the female thread part 13 is formed at a central portion of the bottom surface 14 so as to extend toward the base end side along the central axis OL1. In other words, the female thread part 13 is formed on the base end side with respect to the cone gradient seat surface 12 and the bottom surface 14. An opening end of the female thread part 13, which is located on the leading end side, is connected to the base end side of the bottom surface 14.

Regarding the shape of the pin 40 inserted into the pin hole 15 of the holder 10, the pin 40 has a length that is shorter than the entire length of the pin hole 15, as well as having a transverse cross-section with an outer diameter that is slightly smaller than the inner diameter of the pin hole 15. The longitudinal cross-section shown in Figure 3 is a transverse cross-section that is perpendicular to the central axis OL2 of the pin hole 15. As shown in Figure 13, in a state in which the insert 20 is fixed to the holder 10 with the pin 40 being inserted into the pin hole 15, a portion of the peripheral surface of the cylindrical pin 40, which is located closest to the leading end side, is located on the leading end side with respect to the bottom surface 21B of the insert 20. In the state shown in Figure 3, the projected part 21 of the insert 20 and the pin 40 do not contact each other due to the cutout 21C formed in the insert 20. However, when the insert 20 is rotated around the central axis OL1 relative to the holder 10, from the state shown in Fig. 3, the cutout 21C of the projected part 21 is brought into contact with the pin 40. When the cone gradient surface 21C is brought into contact with the pin 40, the relative rotation of the insert is restricted due to such contact. In other words, the pin 40 inserted into the pin hole 15 formed in the holder 10 functions as a rotation stop mechanism which restricts a relative rotation of the insert 20 which is fixed to the holder 10, so as not to be rotated around the central axis OL1 relative to the holder 10.

In order to fix the insert 20 to the holder 10 from the state where the insert 20 is not fixed to the holder 10 as shown in Figure 2, the bolt 30 is first inserted through the through hole 24 from the leading end side where the cutting edge 25 of the insert 20 is formed. The male screw part 31 of the bolt 30, which has been inserted through the through hole 24 and extends out from the base end side of the through hole 24, is inserted into the female thread part 13 in the recessed part 11 of the holder 10. When the inserted bolt 30 is rotated around the central axis OL1 in a fastening direction, the insert 20 is moved in conjunction with the bolt 30 toward the base end side so as to approach the holder 10 along the central axis OL1. When the bolt 30 and the insert 20 are moved by a certain distance, the cone gradient surface 21A of the projected part 21 of the insert 20 is brought into contact with the cone gradient seat surface 12 of the recessed part 11 of the holder 10. When the bolt is rotated further in the fastening direction, the central axis of the holder which is provided with the recessed part 11 and the central axis of the insert 20 which is provided with the projected part 21 are aligned with each other, due to the contact between the cone gradient seat surface 12 of the recessed part 11 and the cone gradient surface 21A of the projected part 21. By inserting the pin 40 into the pin hole 15 of the holder 10 after the insert 20 is fixed at the position where the insert 20 is no longer moved with respect to the holder 10, the insert 20 which has been fixed to the holder 10 is restricted from rotating around the central axis OL1. In order to remove the insert 20 which has been fixed to the holder 10, it is only necessary to rotate the bolt 30 around the central axis OL1 in an unfastening direction.

As described above, in the rotary cutting tool 100 of the present embodiment, the insert 20 includes: the projected part 21 that is projected toward the base end side along the central axis OL1; and the through hole 24 that extends through the insert 20 along the central axis OL1. The cone gradient surface 21A formed on the projected part 21 constitutes a conical surface which is formed such that the outer diameter decreases from the leading end side toward the base end side along the central axis OL1. The recessed part 11, which is recessed along the central axis OL1, is formed on the leading end side of the holder 10 where the insert 20 is fixed. The inner diameter of the cone gradient seat surface 12 formed in the recessed part 11 increases from the base end side toward the leading end side along the central axis OL1. Therefore, at least a portion of the projected part 21 is housed in the recessed housing part that is formed by the cone gradient seat surface 12 and the bottom surface 14. The female thread part 13 is formed on the base end side with respect to the cone gradient seat surface 12 and the bottom surface 14. In the rotary cutting tool 100 of the present embodiment, the bolt 30 is inserted through the through hole 24 of the insert 20, and the male screw part 31 of the inserted bolt 30 is screwed into the female thread part 13 of the holder 10, whereby the insert 20 is fixed to the holder 10. That is to say, since the holder 10 and the insert 20 are formed as separate components, when the cutting edge 25 of the insert 20 is damaged, it is only necessary to replace the insert 20, without needing to replace the entire rotary cutting tool 100 including the holder 10. In particular, centerless machining, which is performed for a holder 10 in the case where the holder 10 and the insert 20 are configured as an integrated component, does not have to be performed during the replacement of the insert 20 in the present embodiment. In addition, since the insert 20 can be replaced while the holder 10 remains mounted on an apparatus that rotates the rotary cutting tool 100, it is possible to shorten the time required for adjusting the original point of the rotary cutting tool 100 with respect to the apparatus. As a result, it is possible to reduce the cost of the rotary cutting tool 100, as well as the manufacturing cost of a part to be cut by the rotary cutting tool 100. When the male screw part 31 and the female thread part 13 are fastened with each other, the cone gradient seat surface 12 formed in the housing part of the holder 10 and the cone gradient surface 21A formed on the projected part 21 of the insert 20 are brought into contact with each other. When the bolt 30 is rotated in the fastening direction after such contact, the holder 10 and the insert 20 are moved so as to approach each other along the central axis OL1, while the respective central axes are aligned with each other due to the contact between the cone gradient seat surface 12 and the cone gradient surface 21A. Since the cone gradient seat surface 12 formed on the holder 10 and the cone gradient surface 21A formed on the insert 20 do not have a complicated shape in the present embodiment, the recessed part 11 of the holder 10 and the projected part 21 of the insert 20 can be easily machined. In addition, since the positioning is performed by means of mating between the cone gradient seat surface 12 and the cone gradient surface 21A, it is possible to prevent misalignment of the insert 20 with respect to the holder 10.

In the present embodiment, in the longitudinal cross-section of the holder 10 which includes the central axis OL1, the angle formed by the cone gradient seat surface 12 and the central axis OL1 is 30 degrees. Since the angle formed by the cone gradient seat surface 12 and the central axis OL1 of the holder 10 is 30 degrees in the present embodiment, the thickness of a portion of the holder 10 where the recessed part 11 is formed does not become too thin, which makes it possible to prevent the stiffness of the holder 10 from being lowered. In addition, since the angle formed by the cone gradient seat surface and the central axis OL1 of the holder 10 is 60 degrees or less, it is possible to prevent misalignment of the insert 20 with respect to the holder 10 during fastening, and is therefore possible to prevent the insert 20 from being fixed to the holder 10 in a tilted manner.

In the present embodiment, the pin 40 inserted into the pin hole 15 formed in the holder 10 functions as a rotation stop mechanism which restricts the insert 20 fixed to the holder 10 from rotating around the central axis OL1 relative to the holder 10. In other words, the fixed insert 20 can be prevented from being rotated around the central axis OL1 relative to the holder 10, which makes it possible to allow the rotary cutting tool 100 to sufficiently exert its functions as a tool.

In the insert 20 of the present embodiment, the step ST is formed in the through hole 24 at a position where the inner diameter of the base end side hole 24A and the inner diameter of the leading end side hole 24B are shifted. Therefore, the head 32 of the bolt 30 which has been inserted into the through hole 24 can be hooked on the step ST. Such configuration makes it possible to restrict the position of the bolt 30 along the central axis OL1 with respect to the insert 20.

### <Second Embodiment>

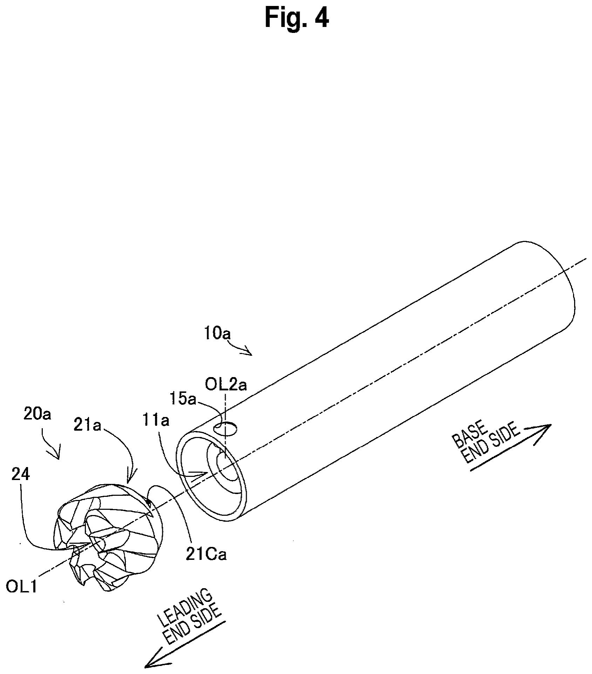

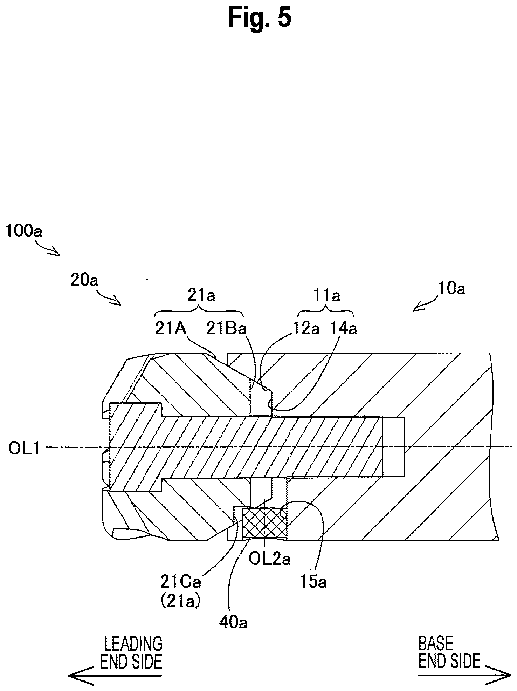

Figure 4 is a schematic exploded perspective view of a holder 10a and an insert 20a of the second embodiment. Figure 5 is a schematic cross-sectional view of a rotary cutting tool 100a of the second embodiment. The rotary cutting tool 100a of the present embodiment differs from the rotary cutting tool 100 of the first embodiment in terms of a rotation stop mechanism of the insert 20a. In the second embodiment, the rotation stop mechanism that is different from the first embodiment will be described below, and the description of configurations that are the same as those of the first embodiment will be omitted.

As shown in Figure 4, the holder 10a of the second embodiment is provided with a pin hole 15a formed along a central axis OL2a which extends along a radial direction of a transverse cross-section of the central axis OL1. Figure 5 shows a longitudinal cross-section that is parallel to both the central axis OL1 and the central axis OL2a. As shown in Figures 4 and 5, the pin hole 15a does not completely extend through the holder 10a along the transverse cross-section of the holder 10a, unlike the pin hole 15 of the first embodiment. A portion of a cone gradient seat surface 12a and a portion of a bottom surface 14a that form a recessed part 11a have been removed so as to constitute the pin hole 15a. A pin 40a has a circular cross-section that is slightly smaller than the pin hole 15a and has a cylindrical shape extending along the central axis OL2a, as shown in Figure 5.

As shown in Figures 4 and 5, a cutout 21Ca is formed in a projected part 21a. As shown in Figure 5, the cutout 21Ca is formed at a position where the projected part 21a does not contact the pin 40a, in a state in which the pin 40a is inserted into the pin hole 15a and the insert 20a is fixed to the holder 10a. Similarly to the first embodiment, a portion of the peripheral surface of the cylindrical pin 40a, which is located closest to the leading end side, is located on the leading end side with respect to the bottom surface 21Ba of the insert 20a. Thus, when the insert 20a is rotated around the central axis OL1 relative to the holder 10a, the cutout 21Ca of the projected part 21a is brought into contact with the pin 40a. In other words, the pin 40a inserted into the pin hole 15a formed in the holder 10a functions as a rotation stop mechanism.

### <Third Embodiment>

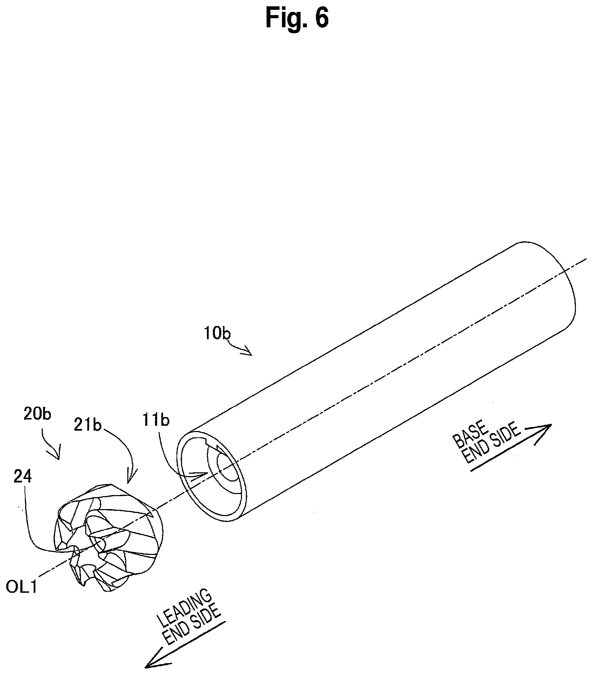

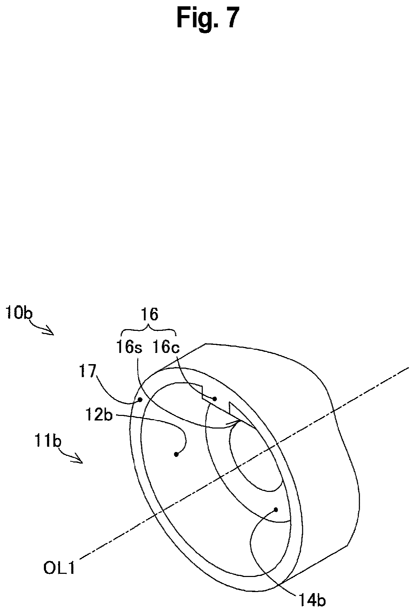

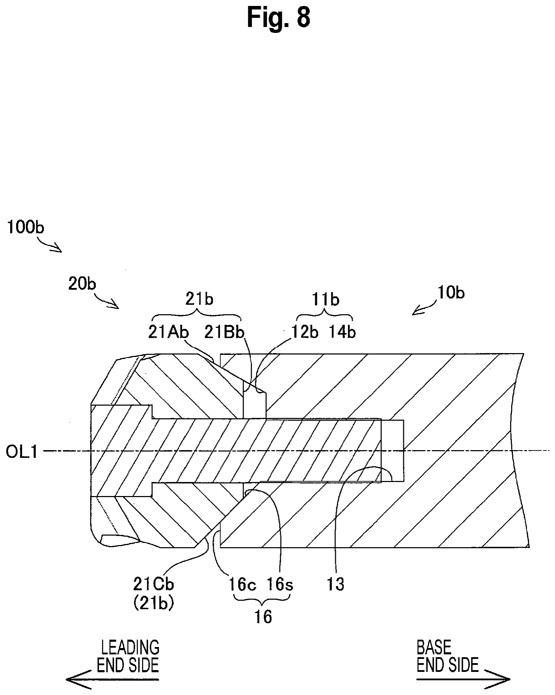

Figure 6 is a schematic exploded perspective view of a holder 10b and an insert 20b according to a third embodiment. Figure 7 is an enlarged perspective view of a recessed part 11b of the holder 10b according to the third embodiment. Figure 8 is a schematic cross-sectional view of a rotary cutting tool 100b according to the third embodiment. The rotary cutting tool 100b of the third embodiment differs from the rotary cutting tool 100 of the first embodiment and the rotary cutting tool 100a of the second embodiment in terms of the rotation stop mechanism of the insert 20b. Therefore, in the third embodiment, the rotation stop mechanism that is different from those of the first and second embodiments will be described below, and the description of configurations that are the same as those of the first and second embodiments will be omitted.

Figure 7 shows a schematic enlarged perspective view of the recessed part 11b shown in Figure 6. As shown in Figure 7, the holder 10b of the third embodiment is provided with the recessed part 11b and an end surface 17 that connects the holder 10b and a peripheral surface. The end surface 17 has a shape in which a portion corresponding to a hollow portion of the recessed part 11b has been removed from a circle that is perpendicular to the central axis OL1. The end surface 17 is a portion of the holder 10b which is located closest to the leading end side.

As shown in Figure 7, a projected part 16 that is projected toward the center in the radial direction is formed in a portion of a cone gradient seat surface 12b that constitutes the recessed part 11b. The projected part 16 has: a projected surface 16c that is projected from the end surface 17 toward the center in the radial direction along a transverse cross-section that is parallel to the end surface 17; and an inclined surface 16s that is connected to the projected surface 16c. As shown in Figure 8, the inclined surface 16s is an inclined surface that extends toward the center as it extends from the projected surface 16c, to which the inclined surface 16s is connected, toward the base end side. The inclined surface 16s is connected to an opening end surface of the female thread part 13.

As shown in Figure 8, a cutout 21Cb is formed in a portion of the projected part 21b of the insert 20b, and the cutout 21Cb is formed by cutting out a portion of the cone gradient surface 21Ab. As shown in Figure 8, the cutout 21Cb is an inclined surface which is formed so as to be engaged with the inclined surface 16s of the projected part 16 when the insert 20b is fixed to the holder 10b. More specifically, the cutout 21Cb is an inclined surface that approaches the center as it extends toward the base end side. In addition, an angle formed by the inclined surface of the cutout 21C and the central axis OL1 is the same as an angle formed by the inclined surface 16s of the holder 10b and the central axis OL1.

As shown in Figure 8, the projected part 16 in the recessed part 11b of the holder 10b is projected toward the center in the radial direction, with respect to the cone gradient seat surface 12b and the cone gradient surface 21Ab in the projected part 21b of the insert 20b. Therefore, when the insert 20b is rotated around the central axis OL1 relative to the holder 10b, the projected part 16 is brought into contact with the cone gradient surface 21Cb. In other words, the projected part 16 formed in the recessed part 11b of the holder 10b functions as a rotation stop mechanism.

### <Fourth Embodiment>

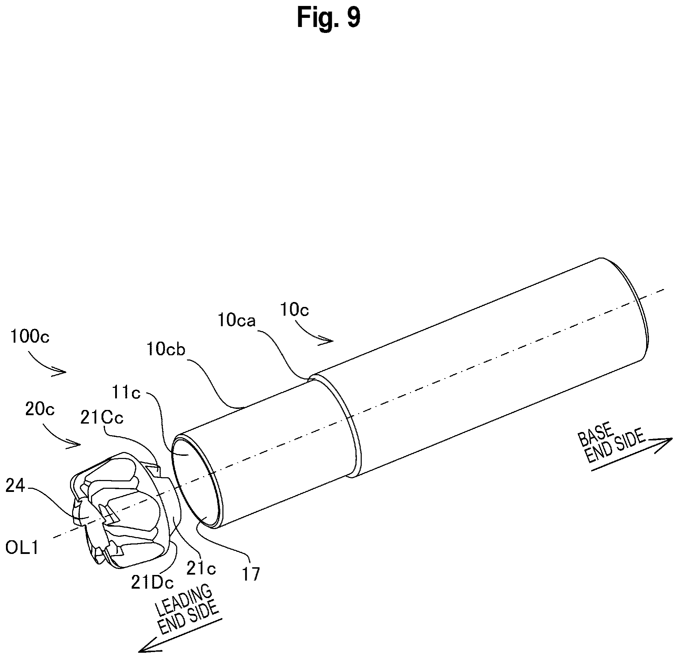

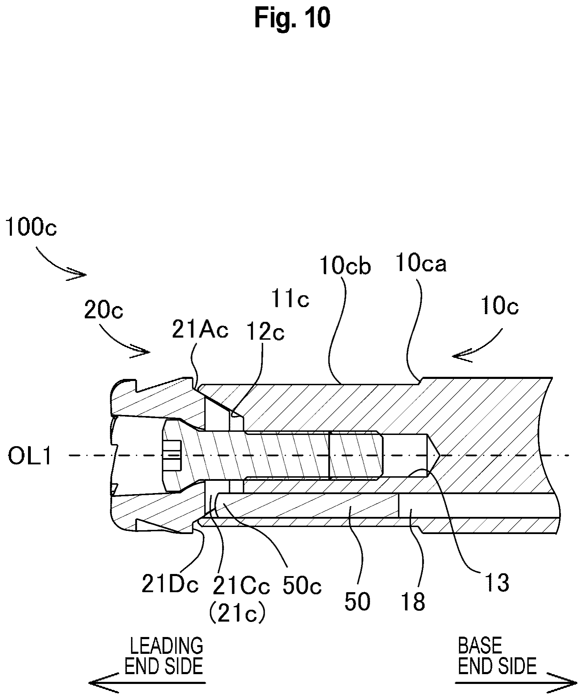

Figure 9 is a schematic exploded perspective view of a holder 10c and an insert 20c according to a fourth embodiment. Figure 10 is a schematic cross-sectional view of a rotary cutting tool 100c according to the fourth embodiment. The rotary cutting tool 100c of the fourth embodiment differs from the rotary cutting tool 100 of the first embodiment through the rotary cutting tool 100b of the third embodiment in terms of a rotation stop mechanism of the insert 20c. Therefore, in the fourth embodiment, the rotation stop mechanism that is different from the first through third embodiments will be described below, and the description of configurations that are the same as those of the first through the third embodiments will be omitted.

As shown in Figure 9, the holder 10c of the fourth embodiment is provided with an end surface 17 that connects a recessed part 11c and a peripheral surface of the holder 10c. The end surface 17 has a shape in which a portion corresponding to a hollow portion of the recessed part 11c has been removed from a circle that is perpendicular to the central axis OL1. The end surface 17 is a portion of the holder 10c which is located closest to the leading end side.

As shown in Figure 10, an insertion hole 18 is formed in a portion of a cone gradient seat surface 12c that constitutes the recessed part 11c, with the insertion hole 18 being formed from the leading end side toward the base end side in a direction parallel to the central axis OL1. A partition wall is provided between the insertion hole 18 and the through hole 24. A rotation stop pin 50 is inserted (pressed) into the insertion hole 18 so as to be projected from the insertion hole 18 onto a cone gradient seat surface 12c. The insertion hole 18 and the rotation stop pin 50 each have a circular cross-sectional shape as illustrated, as the optimum embodiment, in the present embodiment; however, the cross-sectional shape of the insertion hole is not limited thereto and may encompass polygonal shapes in the present embodiment. In addition, the insertion hole 18 is formed so as to extend through the holder 10c from the leading end side to the base end side in the present embodiment; however, this is merely the optimum embodiment, and the insertion hole 18 may not necessarily extend through the holder 10c, and it is only necessary for the insertion hole 18 to allow a rotation stop pin (described later) to be inserted therein. Therefore, the insertion hole 18 may be formed as a blind hole.

As shown in Figure 10, a groove 21Cc is formed in a portion of a projected part 21c of the insert 20c, the groove 21Cc being formed by cutting out a portion of a cone gradient surface 21A in a quadrangular shape. As shown in Figure 9, the groove 21Cc is an engagement groove that is formed so as to engage with the rotation stop pin 50 that has been inserted into the insertion hole 18, when the insert 20c is fixed to the holder 10c. More specifically, the cutout 21Cc is formed by removing a portion of the projected part 21c of the insert 20c toward the through hole 24.

As shown in Figure 10, the rotation stop pin 50 that has been inserted into the insertion hole 18 in the recessed part 11c of the holder 10c is projected toward the center in the radial direction with respect to the cone gradient seat surface 12c and a cone gradient surface 21Ac of the projected part 21c of the insert 20c. Therefore, when the insert 20c is rotated around the central axis OL1 relative to the holder 10c, the rotation stop pin 50 is brought into contact with the groove 21Cc of the cone gradient surface 21c. In other words, a leading end part 50c (a portion projected with respect to the cone gradient seat surface 12c) of the pin 50 formed in the recessed part 11c of the holder 10c functions as a rotation stop mechanism.

According to the above-described rotation stop mechanism of the present embodiment, by pressing the rotation stop pin 50 into the holder 10c in a perpendicular manner, i.e., in a direction parallel to the central axis OL1, even if a load caused by the rotation of the tool is applied to the rotation stop pin 50 in use, the rotation stop pin 50 can still be prevented from falling out and play its role of stopping the rotation of the insert 20c during use.

Furthermore, since the groove 21Cc is formed in the cone gradient surface 21c with which the leading end part 50c of the rotation stop pin 50 is brought into contact, lateral sides of the leading end part 50c of the rotation stop pin 50 can still be held by walls on both sides of the groove 21Cc even when a force in the rotating direction, i.e., a transverse force with respect to the axial direction of the rotation stop pin 50, acts on the leading end part 50c. In this regard, the cutout 21C, etc. indicated in other embodiments may alternatively be employed; however, if a transverse force with respect to the axial direction of the rotation stop pin 50 is applied in such case, the leading end part 50c of the rotation stop pin 50 produces a diagonal force when a force acts on the rotating direction of the insert 20c, which causes a force to act on the insert 20c in a floating direction and thereby causes the insert 20c to be tilted. Accordingly, the configuration of the groove illustrated in the present embodiment is the optimum embodiment.

In the holder 10c of the present embodiment, a step part 10ca is formed at a position closer to the leading end side than the base end side on the peripheral surface, and a portion of the holder 10c which is located on the leading end side with respect to the step part 10ca is formed as a thin diameter part 10cb having a thin diameter. By forming such thin diameter part 10cb, the outer shape of the holder 10c becomes relatively thin with respect to the outer diameter of the insert 20c, which is effective in preventing the holder 10c from coming into contact with a workpiece during machining. It should be noted that, if the thin diameter part 10cb is configured by simply making the outer shape of the holder 10, 10a or 10b of the first, second or third embodiment thinner, the thickness of an end at the end surface 17 of the holder 10c becomes thin, which causes a concern to the effect that the strength for supporting the insert 20c during cutting will be lowered.

Under such circumstances, it would be possible to reduce the size of the cone gradient surface in order to secure the above-described thickness; however, in such case, since the insert of the same size as those of the first to third embodiments is also used in the present embodiment and the size of the cone gradient surface therefore becomes smaller than the size of the insert 20c, there is a concern to the effect that the insert 20c will float and it will become unable to secure a sufficient contact area between the holder and the insert. In order to secure a sufficient contact area between the holder and the insert in such case, the tapering size of the insert needs to be reduced; however, reducing the size of the entire insert will lead to shortening of a cutting edge on a side surface of the insert, which would limit the cutting depth during cutting.

In view of the above, in the present embodiment, by forming a step part 21Dc between the projected part 21c of the insert 20c and a cutting edge so as to form a stepped insert as shown in Figures 9 and 10, it is possible to reduce the size of the cone gradient surface 21Ac while securing the length of the cutting edge on the side surface, which makes it possible to achieve a good balance between securing the contact area between the holder 10c and the insert 20c and securing the length of the cutting edge.

### <Modifications of the Present Embodiments>

The present invention is not limited to the above-described embodiments, and may be implemented in various other embodiments without departing from the gist thereof. For example, the following modifications may be made.

In the first embodiment, the rotary cutting tool 100 comprising: the holder 10 provided with the recessed part 11; the insert 20 having the projected part 21 with at least a portion thereof being housed in the recessed part 11; and the bolt 30 that is inserted into the through hole 24 of the insert 20 and screwed into the female thread part 13 of the holder 10, has been described as an example; however, modifications may be made to the configuration of the rotary cutting tool 100. For example, the rotary cutting tool 100 may be constituted only by the holder 10 and the insert 20, without employing the bolt 30 and the pin 40. The rotary cutting tool 100 may be a tool other than an end mill, such as a reamer and a cutter. It is only necessary that the cutting edge 25 has at least one of the peripheral edge 25o and the end cutting edge 25b. Furthermore, it is possible to only distribute the holder 10 and the insert 20 as parts of the rotary cutting tool 100.

Although the angle formed by the cone gradient seat surface 12 of the holder 10 and the central axis of the holder 10, and the angle formed by the cone gradient surface 21A of the insert 20 and the central axis of the insert 20, are each 30 degrees in the first embodiment described above, such angles may be less than 30 degrees or more than 30 degrees. The angle formed by the cone gradient seat surface 12 and the central axis is preferably 30 degrees or more, in order to prevent the stiffness of the holder 10 from being lowered. The angle formed by the cone gradient seat surface 12 and the central axis is preferably 60 degrees or less, in order to stabilize edge runout (tilting) of the cutting edge 25 of the insert 20 fixed to the holder 10. The rotation stop mechanisms in each of the first to third embodiments is merely an example, and known configurations may be employed. It should be noted that, for the sake of explanation, the central axis of the holder 10 and the central axis of the insert 20 have been described as coinciding with, and therefore the same as, the central axis OL1, in each of the first to third embodiments.

In the first embodiment, the step ST, which is formed at a position of the through hole 24 where the inner diameter of the base end side hole 24A and the inner diameter of the leading end side hole 24B are shifted, restricts the position, along the central axis OL1, of the head 32 of the bolt 30 that has been inserted through the through hole 24. However, the shape of the engagement surface that engages with the head 32 of the bolt 30 and thereby restricts the position of the bolt 30 may be other shapes than the step ST, and modifications may be made thereto. For example, such engagement surface may be a cone gradient surface that is formed by gradually tapering the inner diameter of the base end side hole 24A toward the opening end surface of the leading end side hole 24B.

Although the present disclosure has been described above based on the embodiments and modifications thereof, the above-described embodiments of the present disclosure are provided for the purpose of aiding in the understanding of the present disclosure, instead of limiting the present disclosure. Changes and modifications may be made to the present disclosure without departing from the gist thereof or the scope of claims, and the present disclosure also encompasses equivalents thereto. In addition, any technical features may be eliminated as appropriate, unless they are described herein as essential features.

### Reference Signs List

10, 10a, 10b...holder
10ca...step part
10cb...thin diameter part
11, 11a, 11b ...recessed part
12, 12a, 12b...cone gradient seat surface
13...female thread part
14, 14a...bottom surface of the recessed part
15, 15a...pin hole
16...projected part
16c... projected surface
16s...inclined surface
17...end surface
18... insertion hole
20, 20a, 20b, 20c...insert
21, 21a, 21b, 21c... projected part
21A., 21Aa, 21Ab, 21Ac...cone gradient surface
21B, 21Ba, 21Bb, 21Bc...bottom surface of the projected part
21C, 21Ca, 21cb...cutout
21Cc...groove
21Dc...step part
24...through hole
24A...base end side hole
24B...leading end side hole
25...cutting edge
25b...end cutting edge
25o...peripheral edge
30...bolt
31...male screw part
32...head
40, 40a...pin
50... rotation stop pin
50c...leading end part
100, 100a, 100b...rotary cutting tool
OL1...central axis of the rotary cutting tool
OL2, OL2a...central axis of the pin hole
ST... step (engagement surface)

## Claims

1. A rotary cutting tool, comprising:
a holder; and
an insert that is fixed to the holder, wherein the insert includes:
a cutting edge that is formed on at least one of one end in an axial direction of the insert and a side surface of the insert;
a projected part that is formed on the other end in the axial direction of the insert, the projected part being projected along the axial direction of the insert; and
a through hole that extends through the insert along the axial direction of the insert,
wherein the projected part has a cone gradient surface such that an outer diameter of the projected part decreases from a side of the one end of the insert toward a side of the other end of the insert,
wherein the holder has an elongated shape, and the holder is provided with a recessed part on one end where the insert is fixed, the recessed part being recessed along an axial direction of the holder, wherein the recessed part includes:
a recessed housing part in which the projected part of the insert is housed, the housing part being provided with a cone gradient seat surface such that an inner diameter increases from a side of the other end of the holder toward a side of the one end of the holder; and
a female thread part that is located on the side of the other end of the holder with respect to the housing part and is formed along the axial direction of the holder, the female thread part having an opening end that is formed in the housing part.

2. The rotary cutting tool according to claim 1, wherein an angle formed by the cone gradient seat surface and an axis of the holder, in a longitudinal cross-section of the holder which includes the axis of the holder, is 30 degrees or more and 60 degrees or less.

3. The rotary cutting tool according to claim 2, wherein:
the insert is fixed to the holder by a bolt that is inserted through the through hole and screwed into the female thread part; and
the rotary cutting tool further comprises a rotation stop mechanism that restricts the insert from rotating around the axis of the holder relative to the holder.

4. The rotary cutting tool according to claim 3, wherein an inner diameter of the through hole which is located on the side of the one end of the insert is larger than an inner diameter of the through hole which is located on the side of the other end of the insert, wherein an engagement surface is formed at a position where the inner diameters are shifted.

5. The rotary cutting tool according to any one of claims 1 to 4, wherein the rotary cutting tool is an end mill having the cutting edge.

6. An insert fixed to a holder of a rotary cutting tool for use, the insert comprising:
a cutting edge that is formed on at least one of one end in an axial direction of the insert and a side surface of the insert;
a projected part that is formed on the other end in the axial direction of the insert, the projected part being projected along the axial direction of the insert; and
a through hole that extends through the insert along the axial direction of the insert,
wherein the projected part has a cone gradient surface such that an outer diameter of the projected part decreases from a side of the one end of the insert toward a side of the other end of the insert.

7. A holder that is used for a rotary cutting tool for fixing an insert,
wherein the holder has an elongated shape and is provided with a recessed part on at least one of one end of the holder where the insert is fixed and a side surface, the recessed part being recessed along an axial direction of the holder, wherein the recessed part includes:
a recessed housing part in which at least a portion of the insert is housed, the housing part being provided with a cone gradient seat surface such that an inner diameter increases from a side of the other end of the holder toward a side of the one end of the holder; and
a female thread part that is located on the side of the other end of the holder with respect to the housing part and is formed along the axial direction of the holder, the female thread part having an opening end that is formed in the housing part.
